# EUROPEAN PATENT APPLICATION

(11) **EP 1 855 164 A1**
(43) Date of publication of application: **14.11.2007**
(21) Application number: 07107689.7
(22) Date of filing: 08.05.2007
(51) Int. Cl.: G03G 15/08, G03G 21/16, F16D 3/04, F16D 3/46

(54) **Drive transmission mechanism and image forming device**

(30) Priority: 13.05.2006 JP 2006134573
(71) Applicant: MURATA KIKAI KABUSHIKI KAISHA, Minami-ku Kyoto-shi Kyoto 601 (JP)
(72) Inventor: Kuroda, Yoshiharu, Fushimi-ku Kyoto 612-8686 (JP)
(74) Representative: Ackroyd, Robert

(57) **Abstract**

The direction b in which drive transmission acts on a driving member 18, 19 and a coupling member 20, 21 at a coupling portion is orthogonal to the direction c in which the drive transmission acts on the coupling member 20, 21 and a driven member 83, 85 at a coupling portion. In both of the coupling portions, spaces D1, D2 are provided so that the driving member 18, 19 and the coupling member 20, 21, and the coupling member and the driven member 83, 85, can be respectively coupled to each other under a state in which mutual displacement is permitted in a direction orthogonal to each drive transmission action direction b, c.

## Description

### BACKGROUND OF THE INVENTION

### 1. Field of the Invention

The present invention relates to a drive transmission mechanism. Furthermore, the present invention relates to an image forming device including an electrophotographic process unit which has an axial rotation mechanism and can be removably inserted into a device main body. In particular, the present invention relates to the drive transmission mechanism for transmitting drive to the axial rotation mechanism, and relates to the image forming device adopting the drive transmission mechanism.

### 2. Description of the Related Art

An electrophotographic printing unit is frequently used in an image forming device. The image forming device is adopted in a copier, a facsimile machine, a printer, or a Multi Function Peripheral (MFP) including a copying function, a facsimile function, and/or a printing function or the like. In the electrophotographic printing unit, process portions are unitized into a process unit. The unitized process unit (a process cartridge) can be removably inserted into a device main body. For example, the process unit is a drum unit, a developing unit, and/or an integrated unit of the drum unit and the developing unit or the like. In the drum unit, a photoconductive drum and its peripherals are unitized. In the developing unit, a developer container, a developing roller, and/or an agitating and transporting screw etc. are unitized. The process unit includes an axial rotation mechanism. The axial rotation mechanism is, for example, the photoconductive drum, the developing roller, and a screw for agitating and transporting developer or the like. The axial rotation mechanism is rotated by driving force received from a driving source provided in the device main body. The process unit is a consumable supply. Therefore, the process unit is regularly exchanged, and removed from the device main body when maintenance is performed. Accordingly, when the process unit is inserted into the device main body, a drive transmission mechanism is established between the driving source in the device main body and the axial rotation mechanism in the process unit.

In consideration of convenience of insertion and removal of the process unit, the process unit can be inserted into and removed from a side portion (including a front side portion, a rear side portion, a right side portion, and a left side portion) of the device main body horizontally along an axial direction of the axial rotation mechanism. In such a case, a driving member, which is axially rotated by the driving force transmitted from the driving source, is provided on an inner side of the device main body. A driven member is provided on an end side in an inserting direction of the process unit. When the process unit is inserted into the device main body, the driving member and the driven member are coupled coaxially. Thus, drive transmission to the axial rotation mechanism can be carried out. Further, even if an axial center is displaced unavoidably due to process tolerance etc. between the driving member and the driven member, in order to transmit the driving force between the driving member and the driven member, a coupling member is provided between the driving member and the driven member.

Meanwhile, axial center displacement between the driving member in the device main body and the driven member in the process unit occurs generally in two axial directions (i.e. in two mutually-orthogonal axial directions in a plane orthogonal to an axis of the axial rotation mechanism). Since a universal coupling of a known kind is fixed only to either a driving member or a driven member, the universal coupling absorbs axial center displacement in only one axial direction. Furthermore, in a coupling mechanism of another known kind, since a triangular prism projection twisted in a direction of axial rotation is coupled to a concave portion, drive can be transmitted from a driving member to a driven member even if axial center displacement occurs two-dimensionally. However, since the coupling mechanism of the known kind absorbs the axial center displacement, stress strain is generated on both the driving member and the driven member. Therefore, temporal rotational fatigue is expected to occur.

In order to transmit drive from the driving member to the driven member whilst smoothly absorbing the axial center displacement in two axial directions, a coupling member can be composed of a plurality of components to absorb the displacement in each of the axial directions. In such a case, the number of components and the number of assembly man-hours increase. Furthermore, as a means for forming the coupling member with a single component, a material transmutable in two axial directions (such as an elastic material) can be used, however, a problem is that such elastic materials do not have enough intensity to endure great loaded stresses.

### SUMMARY OF THE INVENTION

In order to overcome the problems described above, according to preferred embodiments of the present invention, axial center displacement in two axial directions can be smoothly absorbed, and then drive can be transmitted from a driving member to a driven member.

According to an aspect of the present invention, in a drive transmission mechanism, an axially rotative driving member and a driven member are coaxially coupled via a coupling member. Axial rotation of the driving member is transmitted to the driven member, and the driven member is axially rotated accordingly. The direction in which drive transmission acts on the driving member and the coupling member at a coupling portion is orthogonal to the direction in which the drive transmission acts on the driven member and the coupling member at a coupling portion. In both of the coupling portions, spaces are provided so that the driving member and the coupling member, and the driven member and the coupling member, can be respectively coupled to each other under a state in which mutual displacement is permitted in a direction orthogonal to each of the above-described drive transmission action directions.

According to another aspect of the present invention, even if displacement in two axial directions occurs between the driving member and the driven member, the displacement can be absorbed at the spaces in each of the coupling portions. Therefore, stress strain is not generated on the driving member and the driven member, and drive transmission can be smoothly carried out. Moreover, since the above-described function can be achieved by a coupling relation between the driving member and the driven member via one coupling member, the number of components and the number of assembly man-hours do not increase. In addition, the coupling member can be made of hard resin and metal etc., and consequently, intensity of the components is secured.

According to another aspect of the present invention, the following structure can be applied as a specific coupling structure of the driving member and the coupling member, and of the coupling member and the driven member. That is, a drive transmission end portion of the driving member is provided with a two-pronged action member, which is arranged along the axial direction and has two action protrusions in a manner that each of the action protrusions is arranged symmetrically with respect to each other across an axial center. Concave portions for receiving the action protrusions are provided to a driven transmission end portion of the coupling member. Acted portions are also provided to the driven transmission end portion of the coupling member in a manner that each of the acted portions is symmetrically arranged with respect to each other across the axial center and respectively makes contact with an action portion of the action protrusion during rotation. Space portions for permitting displacement are respectively provided between each of the action protrusions and an inner wall surface of each of the concave portions. In this case, preferably, the action portion of the action protrusion has a protrudingly rounded shape, and makes contact with the acted portion of the coupling member along the axial direction in a substantially line-contact state.

According to a preferred embodiment of the present invention, the driving member and the driven member can be coupled smoothly via the coupling member. Along with this coupling, the axial center displacement in one axial direction is absorbed by the space portion. Moreover, a degree of freedom of relative movement between the action portion of the action protrusion and the acted portion of the coupling member increases. In addition, frictional resistance at a contact portion can be reduced, and noise occurrence during drive can also be reduced.

The driven member preferably includes an axial body having parallel cut surfaces at a driven side end portion. An oblong concave portion, which receives an axial body end portion, is provided at the drive transmission end portion of the coupling member. Preferably, a long-axis direction of the oblong concave portion is orthogonal to the drive transmission action direction, and space portions for permitting the displacement are respectively provided between the axial body end portion and an inner wall surface of the concave portion in the long-axis direction. The coupling structure of the driving member and the coupling member, and of the coupling member and the driven member, may be conversely constructed.

According to another preferred embodiment of the present invention, in an inside of the oblong concave portion, the axial body end portion can slidably move in the long-axis direction, i.e. along the cut surface. Accordingly, displacement in the axial direction between the coupling member and the axial body can be absorbed.

According to another aspect of the present invention, in the image forming device, the electrophotographic process unit including the axial rotation mechanism can be removably inserted into the device main body along the axial direction of the axial rotation mechanism. Further, the image forming device includes either one of the above-described drive transmission mechanisms. When the process unit is inserted into the device main body, drive can be transmitted from the driving source provided in the device main body to the axial rotation mechanism by the drive transmission mechanism.

According to another aspect of the present invention, the process unit can be a developing unit, and the axial rotation mechanism can be a developing roller and/or a screw for agitating and transporting developer. Furthermore, the process unit can also be a drum unit, and the axial rotation mechanism can be a photoconductive drum, a roller charging unit and/or a cleaning roller etc. Moreover, the process unit can be an integrated unit of the drum unit and the developing unit, and similarly, the axial rotation mechanism can be an integrated mechanism of the developing roller, the screw for agitating and transporting developer, the photoconductive drum, the roller charging unit, and the cleaning roller etc.

According to another aspect of the present invention, even if the axial center displacement in two axial directions occurs between the driving member on a device main body side and the rotation mechanism on a process unit side, the axial center displacement in two axial directions can be absorbed by the coupling member. Thus, the drive transmission can be smoothly carried out. Accordingly, advantage that inserting and removing operation of the process unit is easily performed by inserting and removing the process unit from a side portion of the device main body can be applied more effectively. Moreover, it is more effective to adopt the above-described drive transmission mechanism to the developing unit because the developing unit includes a plurality of rotation mechanisms, and also includes a structural and functional feature in which the rotation mechanism is rotationally driven in a resin casing which contains developer.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a schematic perspective view showing an example of an image forming device adopting a drive transmission mechanism according to a preferred embodiment of the present invention.

Fig. 2 is a longitudinal sectional view showing an example of an image forming device adopting a drive transmission mechanism according to a preferred embodiment of the present invention.

Fig. 3 is a sectional view showing an example of a drive transmission mechanism under a state in which the transmission mechanism is yet to be established according to a preferred embodiment of the present invention.

Fig. 4 is a sectional view showing an example of a drive transmission mechanism under a state in which the transmission mechanism has been established according to a preferred embodiment of the present invention.

Fig. 5A is a sectional view taken on line X-X of Fig. 4, and Fig. 5B is a sectional view on arrow taken on line Y-Y of Fig. 4.

Fig. 6 illustrates another preferred embodiment of the present invention.

### DETAILED DESCRIPTION OF PREFERRED EMBODIMENTS

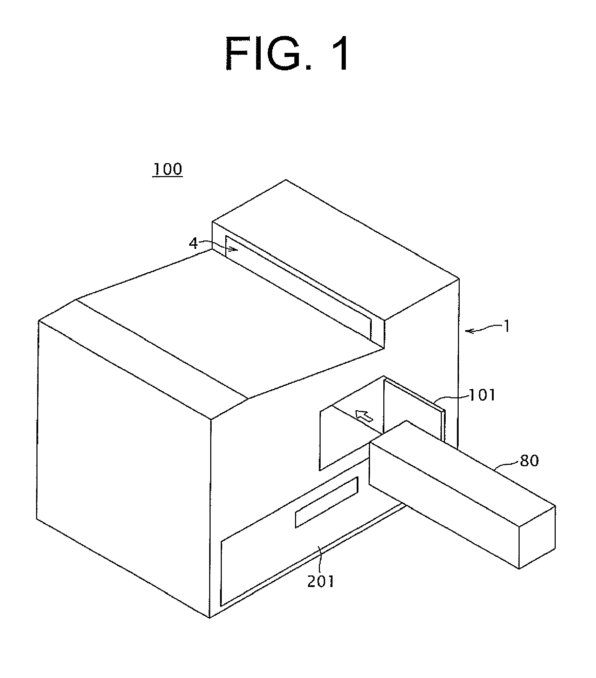

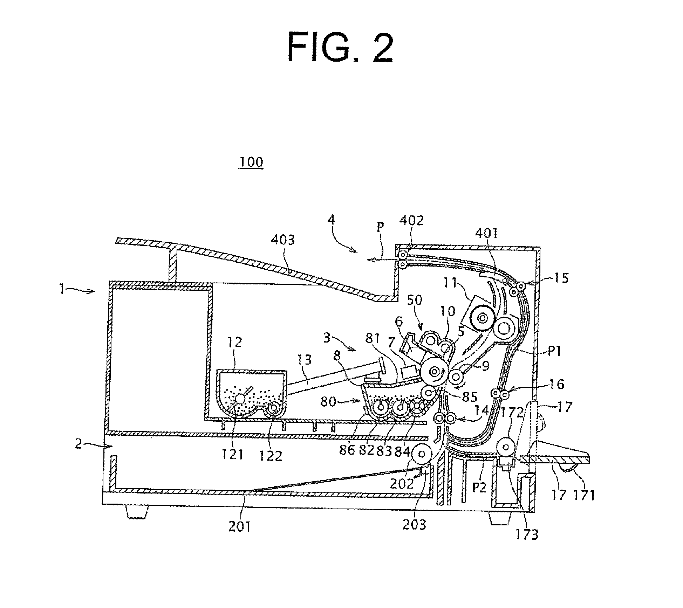

An image forming device 100 shown in Figs. 1 and 2 is a printer including an electrophotographic printing unit as an example. The image forming device 100 is not limited to the illustrated example, and may be a copier, a facsimile machine, or a Multi Function Peripheral (MFP) including a copier function and/or a facsimile function including an image scanning device. In a device main body 1 of the image forming device 100, a paper feeding unit 2 for printing papers, an electrophotographic image printing unit 3, and a discharge unit 4 where printed out papers are discharged, are sequentially stacked in a height direction of the device main body 1. The paper feeding unit 2 includes a paper feed cassette 201, a paper separating and feeding roller 202, and a separating pad 203. The paper feed cassette 201 can accommodate a plurality of stacked printing papers, and can be removably inserted into the device main body 1. The paper separating and feeding roller 202 is arranged at a front end portion in a paper feeding direction of the paper feed cassette 201. The separating pad 203 elastically makes contact with a peripheral surface of the paper separating and feeding roller 202.

The image printing unit 3 includes a process portion and a fuser 11, which is arranged downstream of the process portion. The process portion includes a photoconductive drum 5. A charging unit 6, an exposing unit 7 composed of a Light Emitting Diode (LED) etc., a developing device 8, a transfer roller 9, and a remaining toner removing device 10 are arranged in this order around the photoconductive drum 5. These process portions are provided as a process unit including a drum unit 50 and a developing unit 80. Excluding the exposing unit 7 and the transfer roller 9, the drum unit 50 collectively includes the photoconductive drum 5, the charging unit 6, and the remaining toner removing device 10. The developing unit 80 collectively includes a developer container, an agitator, and a developing roller or the like. The drum unit 50 and the developing unit 80 can be removably inserted into the device main body 1 from its front side. Further, the drum unit 50 and the developing unit 80 may be inserted separately, or inserted under a state in which the drum unit 50 and the developing unit 80 are combined by some combining means. Alternatively, the entire process portion excluding the exposing unit 7 and the transfer roller 9 may be collectively provided as a process unit. The front side of the device main body 1 refers to a diagonally right front side in Fig. 1, and a diagonally left back side in Fig. 1 is referred to as a rear side. In the drawing, the developing unit 80 is shown in a state in which the developing unit 80 is being inserted into the device main body 1 from its front side. A maintenance door 101, which can be opened and closed, is provided on a front surface of the device main body 1. When the maintenance door 101 is opened, the developing unit 80 can be inserted and provided into a prescribed position in the device main body 1. The paper feed cassette 201 can be inserted into and drawn out from the front side of the device main body 1. Insertion of the developing unit 80 will be described below.

The developing unit 80 is a developing device which uses developer composed of two components. A resin-casted developing device housing 81 is used as a developer container and contains developer composed of toner and carrier. Two mutually-parallel agitating and transporting screws 82 and 83 agitate and transport the toner and the carrier. A supplying paddle 84 supplies a biased developing roller 85 with the developer. A magnetic sensor 86 is provided on an outer surface of the developing device housing 81. The magnetic sensor 86 detects toner concentration (mixture ratio of the toner and the carrier) in the developing device housing 81. A toner hopper 12 is provided at a position apart from the developing unit 80. When the magnetic sensor 86 detects that the toner concentration in the developing device housing 81 is decreased, the toner is supplied into the developing device housing 81 by a screw conveyor 13 (a pipe screw). An agitator 121 and a feeding screw 122 are provided in the toner hopper 12.

A switching gate 401, a discharge roller pair 402 and a discharge tray 403 are provided on a downstream side of the fuser 11. The switching gate 401, the discharge roller pair 402, and the discharge tray 403 constitute the discharge unit 4. A resist roller pair 14 is provided near an upstream side of the process portion. Printing papers are separated and fed one sheet at a time from the paper feed cassette 201 by the paper separating and feeding roller 202 and the separating pad 203, and resisted by the resist roller pair 14. Then, the printing paper is introduced into a nip portion between the photoconductive drum 5 and the transfer roller 9. The photoconductive drum 5 rotates in a direction of the arrow shown in Fig. 2, and a surface of the photoconductive drum 5 is uniformly charged by the charging unit 6. An optical image based on image information is irradiated on the surface of the photoconductive drum 5 by the exposing unit 7. Accordingly, an electrostatic latent image is formed on the surface of the photoconductive drum 5. According to characteristics of a photoconductor on the surface of the photoconductive drum 5, electric potential of an irradiated portion changes while electric potential of other portions is maintained, and thus, the electrostatic latent image is formed.

The electrostatic latent image is sequentially developed as a toner image by the biased developing device 8. The toner image then reaches the nip portion between the photoconductive drum 5 and the transfer roller 9. During this developing process, on a portion where the electric potential has been changed by light irradiation, due to a potential difference between the developing device 8 and the electrostatic latent image, toner is adhered to the photoconductive drum 5 to form a black image. The toner is not adhered to a remaining portion of the photoconductive drum 5 where a white image is formed. Thus, a black and white toner image based on image information is formed. The resist roller pair 14 is resist controlled to be rotationally controlled such that a printing paper is introduced into the nip portion in synchronism with the toner image on the surface of the photoconductive drum 5.

Bias voltage is impressed onto the transfer roller 9. The transfer roller 9 is in contact with the photoconductive drum 5. The transfer roller 9 nips and transports the printing paper while being rotated in a direction of an arrow (in a with direction of the photoconductive drum 5) illustrated in Fig. 2. At this time, the toner image on the surface of the photoconductive drum 5 is transferred onto the printing paper. The toner remaining on the surface of the photoconductive drum 5 is removed and collected by the remaining toner removing device 10. The printing paper on which the toner image has been transferred is introduced into the fuser 11, and the toner image is fixed as a permanent image on the printing paper. The printing paper then pushes up the switching gate 401, and is discharged onto the discharge tray 403 through the discharge roller pair 402. This series of the paper feeding and transporting process is carried out along a main feeding path P. The main feeding path P rises substantially vertically (perpendicularly) immediately above the paper feed cassette 201, and makes a U-turn at the discharge roller pair 402 in a direction substantially 180 degrees opposite from a direction in which the main feeding path P extends from the paper feed cassette 201. Such a layout structure downsizes the image forming device as a whole.

The image forming device 100 illustrated in the drawings includes a duplex printing function. A reverse feeding path P1, which joins the main feeding path P, is bypassed and connects a position where the switching gate 401 is provided and an upstream side of the resist roller pair 14 in the main feeding path P. The discharge roller pair 402 can rotate in both directions. Transportation roller pairs 15 and 16 are provided in the reverse feeding path P1. When performing a duplex printing, after one side of the printing paper is printed, the printing paper is transported along the main feeding path P, and a trailing edge of the printing paper reaches the discharge roller pair 402. The discharge roller pair 402 then stops once and nips the trailing edge of the printing paper. Next, the discharge roller pair 402 rotates reversely, and the printing paper, with the trailing edge thereof ahead, is transported through the reverse feeding path P1 by the transportation roller pairs 15 and 16. The printing paper joins the main feeding path P and reaches the resist roller pair 14. The printing paper is resisted by the resist roller pair 14, and again introduced into the nip portion between the photoconductive drum 5 and the transfer roller 9. At this time, a reverse side of the printing paper is printed. After both sides of the printing paper are printed, the printing paper is transported along the main feeding path P and discharged onto the discharge tray 403 as described above.

The image forming device 100 further includes a manual paper feeding function. A manual paper feeding tray 17, which can be opened and closed vertically, is provided on a side portion of the device main body 1. When not using the manual paper feeding tray 17, the manual paper feeding tray 17 is closed as shown by double-dashed lines in Fig. 2. The manual paper feeding tray 17 can be opened and closed by operating a gripper 171. At a front end portion of the manual paper feeding tray 17, a paper separating and feeding roller 172 and a separating pad 173 are arranged elastically contacting with each other. A manual feeding path P2, which joins the main feeding path P, is arranged further downstream of such a contact portion.

When performing an image printing using the manual paper feeding tray 17, the gripper 171 is operated to open the manual paper feeding tray 17. Printing papers are set on the manual paper feeding tray 17, and after a start operation is performed accordingly, the paper separating and feeding roller 172 is operated. The printing papers on the manual paper feeding tray 17 are separated and fed one sheet at a time by the paper separating and feeding roller 172 and the separating pad 173. The printing paper is transported through the manual feeding path P2, and joins the main feeding path P. The printing paper then is resisted by the resist roller pair 14, and introduced into the nip portion between the photoconductive drum 5 and the transfer roller 9. Thus, the image printing is performed. When performing a duplex printing on a manually fed paper, the printing paper is transported by the reversely rotating discharge roller pair 402 through the reverse feeding path P1. Then, as described above, the reverse side of the printing paper is printed. After the printing is completed, the printing paper is discharged by the discharge roller pair 402 onto the discharge tray 403.

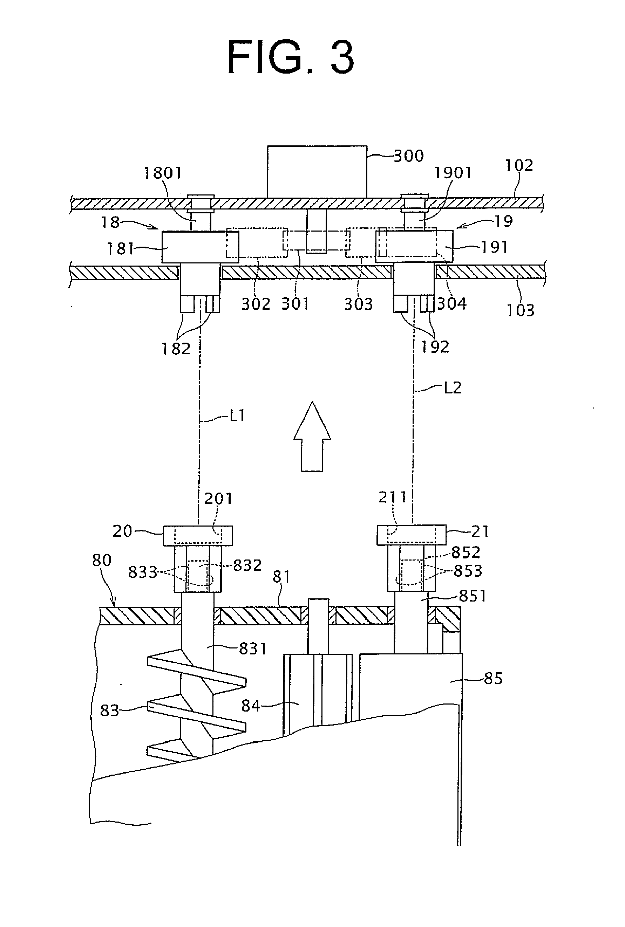

Next, with reference to Figs. 3, 4, and 5, a detailed description will be made of a drive transmission mechanism for the developing unit 80. Attaching boards 102 and 103 are provided as a portion of a rear side frame on the rear side of the device main body 1. Studs 1801 and 1901 are fixed to the attaching board 102 by being pressed and screwed. The studs 1801 and 1901 are respectively arranged along axial centers L1 and L2 of axes (axial bodies) 831 and 851 of the agitating and transporting screw 83 and the developing roller 85. The agitating and transporting screw 83 and the developing roller 85 are provided to the developing unit 80, which is inserted in a direction shown by an outlined arrow in Fig. 3. Transmission gear members (driving members) 18 and 19 are respectively supported by the studs 1801 and 1901 in a manner that the transmission gear members 18 and 19 can axially rotate. The transmission gear members 18 and 19 are respectively used to drive and rotate the screw 83 and the developing roller 85. The transmission gear members 18 and 19 respectively include gear portions 181 and 191. The gear portions 181 and 191 are respectively engaged with idler gears 302, 303, and 304. The idler gears 302, 303, and 304 are connected to an output gear 301 of a motor 300 (a driving source) fixed to the attaching board 102. Thus, a drive transmission system from the motor 300 to the transmission gear members 18 and 19 is established. The idler gears 302, 303, and 304 are supported by a stud (not illustrated) bridged between the attaching boards 102 and 103 in a manner that the idler gears 302, 303, and 304 can axially rotate. However, a number of idler gears is not limited to three as shown in Figs. 2 and 3, and an appropriate number of idler gears may be applied according to a design. Moreover, although not shown, a drive transmission system for driving an axial rotation mechanism for other process portions can be similarly provided between the attaching boards 102 and 103.

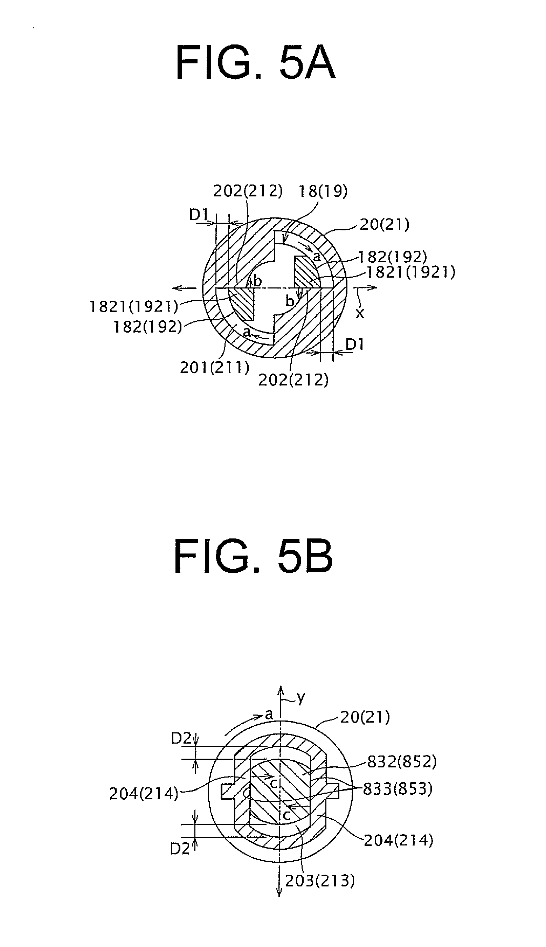

An action member is protrudingly provided respectively at an end portion on a developing unit side (a drive transmission end portion) of the transmission gear members 18 and 19. The action member is a two-pronged member arranged along an axial direction, and each of the action members of the transmission gear members 18 and 19 respectively has action protrusions 182 and 192 in a manner that each of the action protrusions 182 and 192 is arranged symmetrically with respect to each other across an axial center. Parallel cut surfaces 833 and 853 are provided respectively at driven side end portions 832 and 852 (axial body end portions) of axes 831 and 851 of the agitating and transporting screw 83 and the developing roller 85. Coupling members 20 and 21 are respectively attached to the axial body end portions 832 and 852 in a manner that the coupling members 20 and 21 will not come off. Concave portions 201 and 211, and acted portions 202 and 212, are provided respectively at a driven transmission end portion of the coupling members 20 and 21. The concave portions 201 and 211 respectively receive the action protrusions 182 and 192. The acted portions 202 and 212 are respectively arranged symmetrically with respect to each other across the axial center, and respectively make contact with action portions 1821 and 1921 of the action protrusions 182 and 192 during rotation. The acted portions 202 and 212 respectively protrude from an inner peripheral wall portion of the concave portions 201 and 211 towards a central direction in the concave portions 201 and 211. The gear members 18 and 19 are rotated by driving force of the motor 300 in a direction of an arrow "a" shown in Fig. 5A. When the gear members 18 and 19 are respectively coupled to the coupling members 20 and 21, the action portions 1821 and 1921 respectively act on the acted portions 202 and 212 in a direction of an arrow "b" illustrated in Fig. 5A according to the rotation. Thus, the coupling members 20 and 21 rotate in the same direction "a". Spaces D1 are respectively provided between each of the action protrusions 182, 192 and the inner wall surface of each of the concave portions 201, 211 to permit mutual displacement in a direction orthogonal to the action direction "b".

Meanwhile, as shown in Fig. 5B, concave portions 203 and 213, which respectively have an oblong shape in its cross-sectional view and receive the axial body end portions 832 and 852, are respectively provided at the drive transmission end portion (an end portion on the screw 83 and the developing roller 85 sides) of the coupling members 20 and 21. The axial body end portions 832 and 852 are loosely inserted respectively into the oblong concave portions 203 and 213. The parallel cut surfaces 833 and 853 respectively provided around a peripheral body of the axial body end portions 832 and 852 are respectively arranged along a long-axis direction of the oblong concave portions 203 and 213. When the gear members 18 and 19 are respectively coupled to the coupling members 20 and 21, and when drive is transmitted from the motor 300, the coupling members 20 and 21 rotate in the direction "a". According to the rotation of the coupling members 20 and 21, a linear wall portion, i.e. action portions 204 and 214 of the oblong concave portions 203 and 213 respectively act on the cut surfaces 833 and 853 in a direction "c" shown in Fig. 5B. Thus, the axial body end portions 832 and 852 rotate in the same direction "a". The direction "c", in which the coupling members 20 and 21 respectively act on the axial body end portions 832 and 852, is orthogonal to the long-axis direction of the oblong concave portions 203 and 213, and is also orthogonal to the direction "b", in which the gear members 18 and 19 respectively act on the coupling members 20 and 21. In the long-axis direction of the oblong concave portions 203 and 213, spaces D2 are respectively provided between each of the axial body end portions 832, 852 and a curved inner wall surface of each of the concave portions 203, 213 to permit displacement in a direction orthogonal to the action direction "c".

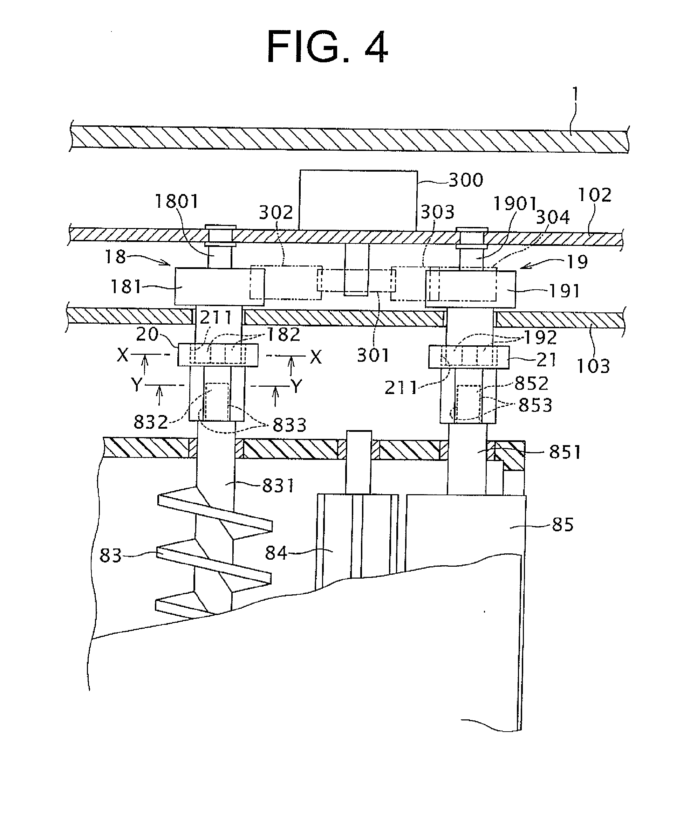

The developing unit 80 is inserted into a prescribed position into the device main body 1 as shown by the outlined arrows in Figs. 1 and 3. As a result, the screw 83 and the developing roller 85 as the driven members are respectively coupled to the gear members 18 and 19 as the driving members via the coupling members 20 and 21. Thus, the drive transmission mechanism for transmitting rotational driving force of the motor 300 to the screw 83 and the developing roller 85 is established. Fig. 4 shows a state in which the drive transmission mechanism has been established. The axial center of the gear members 18 and 19, and the axial centers L1 and L2 of the screw 83 and the developing roller 85 may be slightly displaced generally due to process tolerance etc. in a plane orthogonal to the axial centers L1 and L2, however, this displacement cannot be avoided.

Figs. 5A and 5B respectively show the coupling portion where the gear members 18 and 19 are respectively coupled to the coupling members 20 and 21, and the coupling portion where the coupling members 20 and 21 are respectively coupled to the axial body end portions 832 and 852. In Figs. 5A and 5B, a direction axis orthogonal to the action direction "b" will be referred to as an x-axis, and a direction axis orthogonal to the action direction "c" will be referred to as a y-axis. The axial center displacement occurs in a plane defined by the x-axis and the y-axis. When the axial center of the gear members 18 and 19, and the axial centers L1 and L2 are displaced on a coupling connection, the space D1 permits mutual movement in the x-axis direction in a coupling relation between the gear members 18, 19 and the coupling members 20, 21. Therefore, the displacement in the x-axis direction can be absorbed. Moreover, the space D2 permits mutual sliding movement in the y-axis direction in a coupling relation between the coupling members 20, 21 and the axial body end portions 832, 852. Therefore, the displacement in the y-axis direction can be absorbed. Accordingly, even if the above-described two-dimensional axial center displacement occurs between the gear member 18 and the screw 83 or between the gear member 19 and the developing roller 85, the coupling members 20 and 21 respectively absorb the combined axial center displacement in two axial directions. Therefore, the above-described drive transmission couplings can be smoothly carried out without generating stress strain etc. on both members. Accordingly, temporal rotational fatigue does not occur.

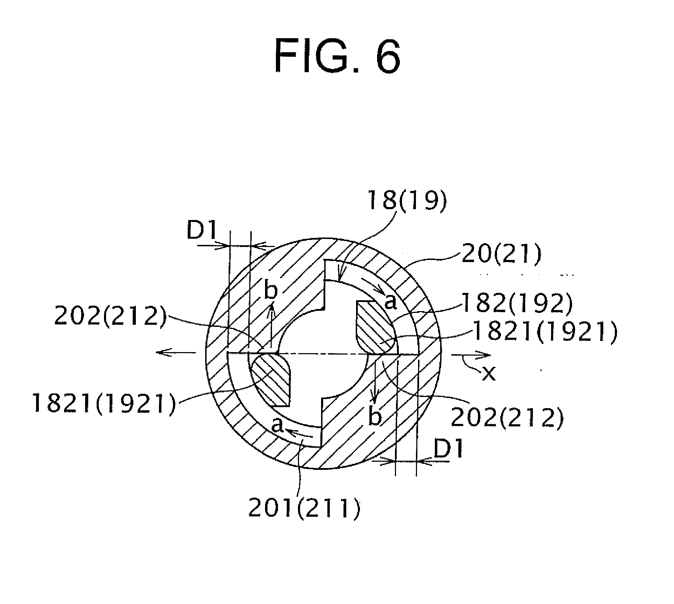

Fig. 6 illustrates another preferred embodiment of the present invention. That is, the action portions 1821 and 1921 of the action protrusions 182 and 192 of the gear members 18 and 19 respectively have a protrudingly rounded shape in its sectional view. The action portions 1821 and 1921 respectively make contact with the acted portions 202 and 212 of the coupling members 20 and 21 along the axial direction in a substantially line-contact state. Thus, a degree of freedom of relative movement between the action portions 1821, 1921 of the action protrusions 182, 192 and the acted portions 202, 212 of the coupling members 20, 21 increases. Moreover, frictional resistance at a contact portion can be reduced, and noise occurrence can also be effectively reduced. Such curved forming can be applied to both end portions of the cut surfaces 833 and 853 of the axial body end portions 832 and 852. Accordingly, frictional resistance at a contact portion between a linear inner wall surface of each of the oblong concave portions 203, 213 and the cut surfaces 833, 853 can be reduced. Since other structures are similar to the structures according to the previous preferred embodiment, like elements are given like reference characters or numbers, and a description thereof will be omitted.

In the above-described preferred embodiment, a structure of the drive transmission mechanism between the gear member 18 and the screw 83 via the coupling member 20 is similar to a structure of the drive transmission mechanism between the gear member 19 and the developing roller 85 via the coupling member 21. Accordingly, Figs 5A, 5B, and 6 also show a coupling portion of the gear member 19 and the developing roller 85 in sectional view on arrow taken on line X-X or on line Y-Y of Fig. 4 similarly to the coupling portion of the gear member 18 and the screw 83. However, both structures may be modified within the present invention. Further, a drive transmission mechanism via a coupling member similar to the above-described coupling members 20 and 21 can also be applied for transmitting drive to the screw 82 or the paddle 84. Furthermore, on an opposite side of the developing unit 80, the drive transmission to the screw 82 or the paddle 84 can be carried out from the screw 83 or the developing roller 85 via an idler gear (not shown). In addition, either the coupling member 20 or 21 may be provided with a gear portion, and the drive transmission can be carried out via the gear portion. Moreover, in the above-described preferred embodiment, a description has been made of the drive transmission mechanism of the axial rotation mechanism in the developing unit 80, however, the drive transmission mechanism of the present invention may be applied to an axial rotation mechanism in the drum unit 50.

While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the true scope of the present invention.

## Claims

1. A drive transmission mechanism wherein an axially rotative driving member (18, 19) is coaxially coupled to a driven member (83, 85) via a coupling member (20, 21), the drive transmission mechanism transmits axial rotation of the driving member (18, 19) to the driven member (83, 85) to axially rotate the driven member (83, 85),
a drive transmission action direction (b) at a coupling portion of the driving member (18, 19) and the coupling member (20, 21) is orthogonal to a drive transmission action direction (c) at a coupling portion of the coupling member (20, 21) and the driven member (83, 85); and
in both of the coupling portions, spaces (D1, D2) are provided so that the driving member (18, 19) and the coupling member (20, 21), and the coupling member (20, 21) and the driven member (83, 85), can be respectively coupled to each other under a state in which mutual displacement is permitted in a direction orthogonal to each of the drive transmission action directions (b, c).

2. A drive transmission mechanism according to claim 1, wherein a drive transmission end portion of the driving member (18, 19) includes a two-pronged action member along an axial direction, the action member has two action protrusions (182, 192) in a manner that each of the action protrusions (182, 192) is arranged symmetrically with respect to each other across an axial center;
a driven transmission end portion of the coupling member (20, 21) includes concave portions (201, 211) for receiving the action protrusions (182, 192), and includes acted portions (202, 212) in a manner that each of the acted portions (202, 212) is symmetrically arranged with respect to each other across the axial center and respectively makes contact with an action portion (1821, 1921) of the action protrusion (182, 192) during rotation; and
the spaces D1 for permitting the displacement are respectively provided between each of the action protrusions (182, 192) and an inner wall surface of each of the concave portions (201, 211).

3. A drive transmission mechanism according to claim 2, wherein the action portion (1821, 1921) of the action protrusion (182, 192) has a protrudingly rounded shape, the action portion (1821, 1921) makes contact with the acted portion (202, 212) of the coupling member (20, 21) along the axial direction in a substantially line-contact state.

4. A drive transmission mechanism according to any preceding claim, wherein the driven member (83, 85) includes an axial body having parallel cut surfaces (833, 853) arranged at an end portion of the axial body;
the coupling member (20, 21) includes an oblong concave portion (203, 213), which is arranged at a drive transmission end portion of the coupling member (20, 21) and receives an axial body end portion (832, 852); and
a long-axis direction of the oblong concave portion (203, 213) is orthogonal to the drive transmission action direction (c) at the coupling portion of the driven member (83, 85) and the coupling member (20, 21), and the spaces (D2) for permitting the displacement are provided between the axial body end portion (832, 852) and the concave portion (203, 213) in the long-axis direction.

5. A drive transmission mechanism according to any preceding claim, wherein the driven member (83, 85) includes an axial body having parallel cut surfaces (833, 853) arranged at an end portion of the axial body;
the coupling member (20, 21) includes an oblong concave portion (203, 213), which is arranged at a drive transmission end portion of the coupling member (20, 21) and receives an axial body end portion (832, 852); and
a long-axis direction of the oblong concave portion (203, 213) is orthogonal to the drive transmission action direction (c) at the coupling portion of the driven member (83, 85) and the coupling member (20, 21), and the spaces D2 for permitting the displacement are provided between the axial body end portion (832, 852) and the concave portion (203, 213) in the long-axis direction.

6. An image forming device (100) wherein an electrophotographic process unit (80) including an axial rotation mechanism can be removably inserted into a device main body (1) along an axis of the axial rotation mechanism;
the image forming device includes a drive transmission mechanism, when the process unit is inserted to the device main body, the drive transmission mechanism transmits drive from a driving source (300) provided in the device main body 1 to the axial rotation mechanism, wherein
the drive transmission mechanism is in accordance with any of claims 1 to 5.

7. An image forming device (100) according to claim 6, wherein the process unit is a developing unit (80), and the axial rotation mechanism is a developing roller (85).

8. An image forming device (100) according to claim 6, wherein the process unit is a developing unit (80), and the axial rotation mechanism is a screw (83) for agitating and transporting developer.
